# EUROPÄISCHE PATENTSCHRIFT

(11) **EP 4 437 295 B1**
(45) Veröffentlichungstag und Bekanntmachung des Hinweises auf die Patenterteilung: **26.02.2025**
(21) Anmeldenummer: 24702745.1
(22) Anmeldetag: 30.01.2024
(51) Int. Cl.: F27B 7/20, C04B 7/43, F27B 7/42, F27D 17/00, F27D 19/00

(54) **OPTIMIERTE WÄRMEFÜHRUNG IN EINER ANLAGE ZUR THERMISCHEN BEHANDLUNG MINERALISCHER STOFFE**
OPTIMIZED CONDUCTION OF HEAT IN A PLANT FOR THE THERMAL TREATMENT OF MINERAL SUBSTANCES
CONDUCTION OPTIMISÉE DE LA CHALEUR DANS UNE INSTALLATION DE TRAITEMENT THERMIQUE DE SUBSTANCES MINÉRALES

(30) Priorität: 14.02.2023 DE 202023103471 U; 14.02.2023 LU 103071
(43) Veröffentlichungstag der Anmeldung: 02.10.2024
(73) Patentinhaber: thyssenkrupp Polysius GmbH, 59269 Beckum (DE); thyssenkrupp AG, 45143 Essen (DE)
(72) Erfinder: WILLMS, Eike, 44309 Dortmund (DE)
(74) Vertreter: thyssenkrupp Intellectual Property GmbH
(86) Internationale Anmeldenummer: PCT/EP2024/052126
(87) Internationale Veröffentlichungsnummer: WO 2024/170265

(56) Entgegenhaltungen:
- DE-A1- 19 518 926
- DE-B3- 102014 010 044
- US-A- 4 071 309

## Beschreibung

Die Erfindung betrifft dient der Erhöhung der Wärmeausschleusung aus einem Brennprozess, um insbesondere weitere Befeuerungen zu vermeiden und so beispielsweise und insbesondere die Abgasreinigung des Hauptprozesses vollständig nutzen zu können.

Zementanlagen sind komplexe Systeme. Die Komplexität nimmt derzeit weiter zu, beispielsweise um die Anlagen umweltschonender zu gestalten. Daher werden beispielsweise Ersatzbrennstoffe eingesetzt, um dadurch insbesondere fossile Ressourcen zu schonen. Ebenso werden Vorrichtungen integriert, um das erzeugte und freigesetzte Kohlendioxid abzutrennen und damit eine Freisetzung des Treibhausgases zu vermeiden. Hierfür wird jedoch Energie benötigt. Gleichzeitig werden beispielsweise Tone eingesetzt und calciniert, um die Kohlendioxidfreisetzung aus dem Edukt zu minimieren, jedoch müssen diese Tone regelmäßig getrocknet werden. Für viele Prozesse wird daher versucht, Energie aus dem Hauptprozess zu nutzen, beispielsweise werden intensiv Wärmetauscher im Bereich der den Prozess verlassenden Gase eingesetzt. Die dadurch zur Verfügung stehende Wärmemenge ist jedoch begrenzt. Gleichzeitig würde eine weitere Verbrennungseinheit die Komplexität insbesondere bei einer Kohlendioxidabtrennung erhöhen.

Aus der DE 10 2018 206 673 A1 ist eine Oxyfuel-Klinkerherstellung mit spezieller Sauerstoffzugasung bekannt.

Aus der DE 10 2018 206 674 A1 ist eine Oxyfuel-Klinkerherstellung ohne Rezirkulation der Vorwärmerabgase bekannt.

Aus der DE 10 2014 010 044 B3 ist ein Verfahren zur Abwärmenutzung in einer Anlage zur Zementherstellung und eine Anlage zur Zementherstellung bekannt.

Aus der DE 195 18 926 A1 ist ein Verfahren und eine Vorrichtung zur Herstellung von gebranntem Gut bekannt.

Aus der US 4 071 309 A ist ein Verfahren und eine Vorrichtung zur Herstellung von Zement mit einem Vorwärmer, einem Ofen und einem Wärmetauscher zur Erhitzung der Verbrennungsluft bekannt.

Daher besteht der Wunsch, thermische Energie möglichst integriert bereitzustellen.

Aufgabe der Erfindung ist es, ausreichend thermische Energie aus dem eigentlichen Hauptprozess auch für alle vor-, nach- oder nebengelagerten Prozesse bereitzustellen.

Gelöst wird diese Aufgabe durch Anlage mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Anlage dient zur thermischen Behandlung eines mineralischen Materials. Insbesondere ist die Anlage eine Anlage zur Herstellung von Zementklinker. Die Anlage weist einen Vorwärmer, einen Calcinator und einen Ofen auf. Die Anlage weist einen Gaseinlass und einen Gasauslass sowie einen Materialeinlass und einen Materialauslass auf. Die Bestandteile (Vorwärmer, Calcinator und Ofen) sind zur Überführung eines Materialstromes vom Materialeinlass über den Vorwärmer, den Calcinator und den Ofen zum Materialauslass verbunden. Die Bestandteile sind weiter zur Überführung eines Gasstromes vom Gaseinlass über den Ofen, den Calcinator und den Vorwärmer zum Gasauslass verbunden. Somit ist die Anlage grundsätzlich im Gegenstrom aufgebaut, wobei streckenweise, beispielsweise im Calcinator dennoch lokal die Ströme im Gleichstrom fließen können. Der Vorwärmer ist mehrstufig ausgeführt. Dieses stellt eine auf die wichtigsten Grundkomponenten reduzierte übliche thermische Behandlungsvorrichtung, beispielsweise zur Herstellung von Zementklinker, dar und ist aus dem Stand der Technik gut und in vielfältigen Ausprägungen bekannt. Üblicherweise weist die Anlage auch einen Materialkühler auf, der üblicherweise zwischen Ofen und Gaseinlass angeordnet ist, in welchem das Produkt abgekühlt und das dem Ofen zugeführte Gas aufgewärmt wird. Hierbei kann der Materialkühler auch so ausgeführt sein, dass nur ein Teilgasstrom in den Ofen überführt wird, ein weiterer Teil des Materialkühlers wird mit einem anderen Gasstrom gekühlt (üblicherweise der kältere Bereich) und der so erwärmte Gasstrom an anderer Stelle, beispielsweise bei einer Trocknungsvorrichtung, verwendet. Beispielsweise kann die Anlage für den Oxyfuel-Betrieb ausgelegt sein, also wird (idealisiert) am Anfang reiner Sauerstoff verwendet, welcher durch Verbrennungsprozesse zu (idealisiert) am Ende reinem Kohlendioxid (zuzüglich Wasser, welches leicht abtrennbar ist) umgesetzt (weiteres Kohlendioxid wird meist aus dem mineralischen material zusätzlich freigesetzt). Dieses (idealisiert) reine Kohlendioxid kann dann ohne aufwändige Gastrennung anderweitig verwendet und so die Emission vermieden werden. Eine der Herausforderungen im Oxyfuel-Prozess ist es, Falschluft, insbesondere Stickstoff aus der Umgebungsluft, zu vermeiden, wozu alle möglichen Gasleckagestellen entsprechend möglichst weitestgehend abgedichtet werden müssen. Beispielsweise kann über den gesamten Prozess die Falschluftmenge bei 5 % bis 10 % liegen. Jede Reduktion der Falschluft führt somit unmittelbar zu einer erhöhten Reinheit des Kohlendioxids und dadurch zu einer Reduktion des Aufwands der notwendigen Aufreinigung. Daher ist es kritisch, wenn Umgebungsluft und damit Stickstoff in den Gasstrom eindringt, ein Entweichen von Gas in die Umgebung ins wenigstens in Hinblick auf den Aspekt der notwendigen Reinigung, nicht relevant. Die Erfindung ist zwar für den Oxyfuel-Prozess besonders geeignet, jedoch nicht auf diesen beschränkt.

Erfindungsgemäß ist der Calcinator zur Überführung des den Calcinator verlassenden Materialstrom oder der Vorwärmer zur Überführung des eine Stufe des Vorwärmers verlassenden Materialstrom mit einer Wärmetauschvorrichtung verbunden. Die Wärmetauschvorrichtung ist zur Rückführung des Materialstroms mit dem Vorwärmer verbunden. Somit wird erfindungsgemäß ein warmer Feststoffstrom und kein Gasstrom aus dem Prozess ausgeschleust. Dieses hat eine Reihe von Vorteilen. Zum einen kann die Ausschleusung eines festen Materialstroms in einfacher Weise gegen das Eindringen von Falschluft abgesichert werden und eignet sich daher insbesondere für den Oxyfuel-Prozess. Zum anderen kann dadurch in sehr einfacher Weise zusätzlich aus dem Prozess auch in vergleichsweise einfacher Form in größerer Menge ausgeschleust werden. Die dafür benötigte Energie kann im Hauptprozess in einfacher Weise bereitgestellt werden, wodurch insbesondere alle zusätzlichen Maßnahmen (Verwendung von Ersatzbrennstoffen, Abgasaufreinigung, Kohlendioxidabtrennung und dergleichen) vollumfänglich genutzt und nicht mehrfach vorgehalten werden müssen, was der Fall wäre, wenn an anderer Stelle eine weitere Verbrennungsvorrichtung zur Erzeugung von Wärme der Fall wäre. Auch kann gerade bei der Verwendung von Ersatzbrennstoffen so die erforderliche Temperatur und Verweilzeit für die sichere Verbrennung in einfacher Weise gewährleistet werden. Die Wärmetauschvorrichtung dient also insbesondere dazu, weitere Wärmeerzeugungsvorrichtung, insbesondere Verbrennungsvorrichtungen im Gesamtkomplex zu vermeiden. Weitere Vorteile werden im Folgenden ausgeführt.

In einer weiteren Ausführungsform der Erfindung ist die Wärmetauschvorrichtung ein Gleichstromwärmetauscher mit Abscheidezyklon oder ein Wirbelbettwärmetauscher. Beide Varianten haben Vorzüge, insbesondere abhängig von der Art, wie die Wärme übertragen werden soll. Ein Gleichstromwärmetauscher mit Abscheidezyklon ermöglicht einen extrem schnellen Wärmeübergang durch den direkten Kontakt zwischen dem Gas und dem festen Material, welches von dem Gasstrom transportiert wird. Als Gas eignen sich hier insbesondere Luft oder auch ein im Kreislauf gefahrenes Prozessgas. Ein Wirbelbettwärmetauscher hingegen weist in einem Wirbelbett angeordnete meist rohrförmige Führungen eines Wärmeträgermediums auf. Hier erfolgt der Wärmeübergang durch eine Wandung, was den Prozess deutlich langsamer macht. Auf der anderen Seite wird dadurch eine Trennung zwischen Material und Wärmeträgermedium erreicht, sodass sich hierfür insbesondere Thermoöle und vor allem Dampf eignen. Hierbei sind insbesondere auch sehr hohe Dampftemperaturen zu erzielen, was wiederum den Wirkungsgrad, beispielsweise in einer Turbine zum Antreiben eines Verdichters oder eines Generators, erhöht. Der Wirbelbettwärmetauscher wird vorzugsweise mit wenig Fluidisierungsgas fluidisiert, wobei das Fluidisierungsgas bevorzugt im Kreis geführt wird. Hierdurch kann beispielsweise der Eintrag von Falschluft in die Anlage sicher ausgeschlossen werden.

In einer weiteren Ausführungsform der Erfindung ist die Wärmetauschvorrichtung mit einer Mahlvorrichtung oder einer Trocknungsvorrichtung verbunden. Bevorzugt ist die Wärmetauschvorrichtung in diesem Fall ein Gleichstromwärmetauscher mit Abscheidezyklon, indem ein Gasstrom erwärmt wird, der dann wiederrum erwärmt in die Mahlvorrichtung geleitet wird. In diesem Fall ist die Verbindung zwischen der Wärmetauschvorrichtung und der Mahlvorrichtung oder der Trocknungsvorrichtung eine Gasleitung für dieses erwärmte Gas.

In einer weiteren Ausführungsform der Erfindung ist der Gasauslass der Anlage mit einer Kohlendioxidabtrennvorrichtung verbunden. Gerade die Zementindustrie ist eine Kohlendioxid-intensive Industrie. Eine Abtrennung hat daher einen sehr großen Effekt. Derzeit stehen bereits mehrere alternative Verfahren zur Kohlendioxidabtrennung aus einem Abgasstrom zur Verfügung. Zwei sind beispielsweise die Amin-Wäsche sowie der Carbonate-Looping-Prozess (auch Calcium-Looping-Prozess). Hierbei sind die für den Carbonate-Looping-Prozess benötigten Temperaturen jedoch deutlich höher. In beiden Fällen wird das Kohlendioxid aus dem Abgasstrom zunächst chemisch gebunden, einmal an ein Amin, einmal an CaO. Das geschieht im Absorber genannten Teil der Kohlendioxidabtrennvorrichtung. Dann wird das mit Kohlendioxid beladene Medium in einen anderen Bereich der Kohlendioxidabtrennvorrichtung transferiert und dort regeneriert, also das Kohlendioxid wieder freigesetzt. Dadurch ist der Kohlendioxidstrom frei von zum Beispiel Stickstoff oder Argon. Für die Regeneration wird üblicherweise Energie benötigt. Beispielsweise und bevorzugt ist die Kohlendioxidabtrennvorrichtung ein Amin-Wäscher. Der Amin-Wäscher weist eine Amin-Regenerationsvorrichtung auf, in welchem das am Amin gebundene Kohlendioxid wieder freigesetzt wird. Die Amin-Regenerationsvorrichtung ist mit der Wärmetauschvorrichtung zur Überführung des in der Wärmetauschvorrichtung erwärmten Mediums verbunden. Hierbei kann die Wärmetauschvorrichtung beispielsweise als Wirbelbettwärmetauscher zur Erzeugung von Dampf ausgeführt sein.

In einer weiteren Ausführungsform der Erfindung ist die dem Calcinator benachbarte erste Stufe des Vorwärmers zur Überführung des verlassenden Materialstrom der ersten Stufe des Vorwärmeres mit der Wärmetauschvorrichtung verbunden. Benachbart bedeutet hier, dass der Materialstrom beziehungsweise der Gasstrom jeweils von dem einen benachbarten Bauteil zu dem anderen benachbarten Bauteil geführt wird, hier als der Materialstrom vom der dem Calcinator benachbarte erste Stufe des Vorwärmers in den Calcinator und der Gasstrom von dem Calcinator in die dem Calcinator benachbarte erste Stufe des Vorwärmers. Die Wärmetauschvorrichtung ist zur Rückführung des Materialstroms mit der zweiten Stufe des Vorwärmers verbunden. Die zweite Stufe ist die der ersten Stufe in Materialstromrichtung nachfolgende und in Gasstromrichtung vorangehende Stufe der ersten Stufe. Dieses hat sich als ideales Temperaturfenster herausgestellt, um so beispielsweise hochwertigen Dampf für eine effiziente weitere Nutzung zu gewinnen.

In einer weiteren Ausführungsform der Erfindung ist die Anlage für den Betrieb mit einem Gas mit weniger als 50 Vol.-%, bevorzugt weniger als 10 Vol.-%, Stickstoff in dem dem Gaseinlass zugeführten Gasstrom ausgelegt. Es handelt sich somit um eine Oxyfuel-Anlage. Ziel ist es hierbei, möglichst jede Nebenluft oder sonst wie in das System gelangende Luft zu vermeiden, um am Ende des Prozesses möglichst reines Kohlendioxid zu haben. Das erfindungsgemäße Verfahren ermöglicht durch die Ausschleusung nur des festen mineralischen Materials dieses in einfacher Weise.

In einer weiteren Ausführungsform der Erfindung weist die Wärmetauschvorrichtung Umgebungsluft als Wärmetauschmedium auf. Das Wärmetauschmedium Luft wird mit dem Materialstrom in direkten Kontakt gebracht. Hieraus ergibt sich ein besonderer Vorteil, wenn die Anlage mit einer Kohlendioxidabtrennvorrichtung verbunden ist und/oder nach dem Oxyfuel-Verfahren betrieben wird. In beiden Fällen gelangt das Kohlendioxid aus dem Hauptprozess nicht in die Umwelt. Aber durch den Kontakt der Umgebungsluft, welche auch, wenn nur in geringen Mengen, Kohlendioxid enthält, mit dem heißen, wenigstens teilweise decarbonatisierten, Material nimmt das decarbonatisierte Material wieder Kohlendioxid auf (besonders optimal um 650 °C). Dieses Kohlendioxid wird spätestens im Calcinator wieder freigesetzt und somit mit dem weiteren Kohlendioxid abgetrennt und nicht in die Umgebung abgegeben. Somit wird nicht nur die Emission von neuem Kohlendioxid verhindert, sondern (wenn auch in geringem Maße) der Atmosphäre entnommen und anschließend gemeinsam mit dem Kohlendioxid aus dem Ofenprozess abgeschieden und in Folge sequestriert werden. Hierbei ist der Aufwand minimal, sodass im Vergleich zu herkömmlicher CO2-Abscheidung und nachfolgenden Sequestrierung Kosten und Energieaufwand minimal sind.

In einer weiteren Ausführungsform der Erfindung weist der Ofen und/oder der Calcinator eine Ersatzbrennstoffzufuhrvorrichtung auf. Ersatzbrennstoffe müssen (auch gesetzlich vorgegeben) bei einer Mindesttemperatur und für eine Mindestzeitdauer verbrannt werden. Dieses ist im Hauptprozess gut möglich. Für kleine Feuerungsanlagen, beispielsweise in einer Trocknungsvorrichtung, wo wesentlich geringere Temperaturen benötigt werden, wäre dieses unwirtschaftlich. Durch die Nutzung der erfindungsgemäßen Wärmetauschvorrichtung kann aber somit auch die benötigte Wärme in einfachster Weise mittels Ersatzbrennstoffen bereitgestellt werden.

In einer weiteren Ausführungsform der Erfindung ist die Wärmetauschvorrichtung mit einer Turbine verbunden. Die Turbine ist mit einem Kohlendioxidkompressor verbunden. Bei einer Abtrennung von Kohlendioxid, beispielsweise nach dem Oxyfuel-Verfahren oder durch Abscheidung in einem Amin-Wäscher, wird das Kohlendioxid verdichtet. Dieser Schritt ist vergleichsweise energieintensiv im Prozess. Alternativ könnte die Turbine auch mit einem Generator zur Stromerzeugung verbunden sein, um beispielsweise die Anlage autark von einem externen Stromnetz zu machen.

In einer weiteren Ausführungsform der Erfindung ist die Wärmetauschvorrichtung zweistufig ausgebildet. Die erste Wärmetauschstufe ist zum Übertrag der Wärme von dem Materialstrom auf einen Gasstrom ausgebildet. Die zweite Wärmetauschstufe ist zur indirekten Übertragung der Wärme von dem in der ersten Wärmetauschstufe erwärmten Gasstroms auf einen Dampfstrom ausgebildet. Daher kann die zweite Wärmetauschstufe beispielsweise als Plattenwärmetauscher oder als Rohrbündelwärmetauscher ausgeführt sein. Hierbei wird bevorzugt das Gas zwischen der ersten Wärmetauschstufe und der zweiten Wärmetauschstufe im Kreis geführt.

In einer weiteren Ausführungsform der Erfindung weist die Anlage eine weitere Wärmetauschvorrichtung auf. Beispielsweise ist eine erste Wärmetauschvorrichtung zwischen der ersten Stufe des Vorwärmers und der zweiten Stufe des Vorwärmers angeordnet und eine zweite Wärmetauschvorrichtung zwischen der zweiten Stufe des Vorwärmers und der dritten Stufe des Vorwärmers angeordnet. Die erste Wärmetauschvorrichtung und die zweite Wärmetauschvorrichtung können dabei unabhängig voneinander verwendet werden, beispielsweise um Wärme für zwei unterschiedliche Prozesse bereitzustellen. Alternativ können diese aber auch für das Wärmetauschmedium in Reihe geschaltet sein. Beispielsweise wird Wasserdampf in der zweiten Wärmetauschvorrichtung zunächst erhitzt und dann in der ersten Wärmetauschvorrichtung noch weiter erhitzt. Hierdurch kann für den Dampf insgesamt ein höheres Temperaturniveau erreicht werden und so ein höherer Wirkungsgrad.

In einer weiteren Ausführungsform der Erfindung weist die Wärmetauschvorrichtung eine Kaltmaterialzuführung auf. Über die Kaltmaterialzuführung wird ein kalter Feststoffstoff der Wärmetauschvorrichtung zugeführt. In der Wärmetauschvorrichtung wird der Materialstrom und der Kaltmaterialstrom, welcher durch die Kaltmaterialzuführung zugeführt wird, vermischt. Es werden in der Wärmetauschvorrichtung die beiden Feststoffströme, heiß und kalt direkt gemischt und dadurch wird die Wärme direkt übertragen. Die Wärmetauschvorrichtung ist zur Rückführung des Materialstroms über den Materialeinlass mit dem Vorwärmer verbunden. Insbesondere und bevorzugt wird der kombinierte Gasstrom (warm und kalt) gemeinsam wieder am Anfang des Verfahrens eingebracht. Hierbei erfolgt beispielsweise und bevorzugt durch die Erwärmung des Kaltmaterialstroms eine Trocknung des Kaltmaterialstroms. Dieser wird durch die Mischung in der Wärmetauschvorrichtung beispielsweise auf 90 °C erwärmt und dadurch getrocknet. Die entweichende Feuchtigkeit wird vorzugsweise über die Gasphase abgeführt und entfernt. Beispielsweise kann über die Kaltmaterialzuführung feinkörnige Materialien zugesetzt, wie zum Beispiel Rohmehl, Kalkstein, Flugaschen, Schlacken, Altsande und/oder Rückstände aus Betonrückbau, wie beispielsweise Brechsande oder Zementstein.

In einer weiteren Ausführungsform der Erfindung ist die Anlage eine Anlage zur Herstellung von Zementklinker.

In einer weiteren Ausführungsform der Erfindung wird die Anlage nach einem Verfahren betrieben, wobei die Verbrennungsprozesse ausschließlich innerhalb der Anlage durchgeführt werden. Es wird also auf weitere Verbrennungsprozesse, beispielsweise in einem Trockner oder einem Amin-Wäscher verzichtet oder diese zumindest in hohem Maße reduziert. Wie bereits ausgeführt, erleichtert dieses wesentlich die Abgasreinigung und insbesondere die Kohlendioxidabtrennung. Ebenso erleichtert es die Verwendung von Ersatzbrennstoffen für alle thermischen Prozesse.

In einer weiteren Ausführungsform der Erfindung wird die in der Wärmetauschvorrichtung ausgeschleuste Wärmemenge in Abhängigkeit der Temperatur des Gasstromes am Gasauslass oder einem dem Gasauslass nachgelagerten Punkt des Gasstromes geregelt. Die Regelung kann beispielsweise über die Regelung der Durchflussmenge des Wärmetauschfluids durch die Wärmetauschvorrichtung erfolgen. Es gibt den Prozessen nachgelagerte Abgasreinigungsprozesse, beispielsweise spezielle Staubabscheider, die nicht über eine gewisse Temperatur kommen dürfen. Durch diese Regelung ist es möglich, auch bei Temperaturschwankungen im Prozess die Austrittstemperatur des Gasstromes in einfacher Weise zu kontrollieren, ohne direkt in den Hauptprozess einzugreifen.

In einer weiteren Ausführungsform der Erfindung wird die Anlage mit einem Gas mit weniger als 50 Vol.-%, bevorzugt weniger als 10 Vol.-%, Stickstoff in dem dem Gaseinlass zugeführten Gasstrom betrieben.

In einer weiteren Ausführungsform der Erfindung verwendet die Wärmetauschvorrichtung Umgebungsluft als Wärmetauschmedium. Das Wärmetauschmedium Luft wird mit dem Materialstrom in direkten Kontakt gebracht.

Nachfolgend ist die erfindungsgemäße Anlage anhand von in den Zeichnungen dargestellten Ausführungsbeispielen näher erläutert.
Fig. 1 Stand der Technik
Fig. 2 erstes Beispiel
Fig. 3 zweites Beispiel
Fig. 4 drittes Beispiel
Fig. 5 viertes Beispiel
Fig. 6 fünftes Beispiel

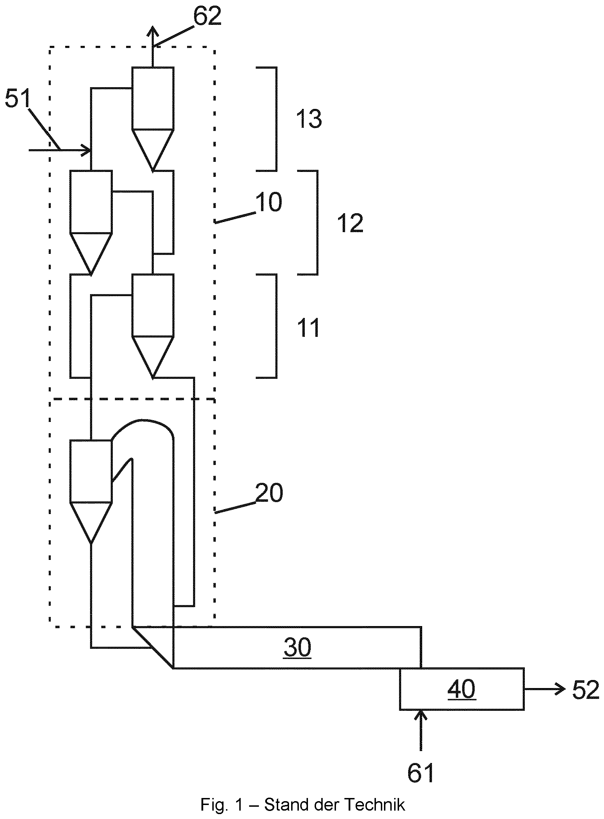

In Fig. 1 ist zunächst eine Anlage nach dem Stand der Technik. Thermisch zu behandelndes Material wird über den Materialeinlass 51 in den Vorwärmer 10 eingebracht und stufenweise in der dritten Stufe 13, der zweiten Stufe 12 und der ersten Stufe 11 vorgewärmt. Die Stufen 11, 12, 13 sind hierbei als Gleichstromwärmetauscher mit Abscheidezyklon ausgeführt. Das vorgewärmte Material wird in den Calcinator 20 überführt, anschließend in den Ofen 30 sowie abschließend einen Materialkühler 40 und von dort zum Materialauslass 52. Der Gasstrom wird zum Materialstrom insgesamt im Gegenstrom geführt. Das Gas wird durch den Gaseinlass 61 in den Materialkühler 40 eingebracht, dort vorgewärmt und in den Ofen 30 überführt. Im Ofen 30 erfolgt üblicherweise eine Verbrennung zur Erwärmung / Energiebereitstellung. Das Gas wird weiter in den Calcinator 20 überführt, wo zumeist eine weitere Verbrennung erfolgt. Das Gas wird aus dem Calcinator 20 in den Vorwärmer 10 und anschließend zum Gasauslass 62 überführt.

Hierbei sind alle weiteren dem Fachmann bekannte Abwandlungen oder Variationen möglich, die für solche Anlagen üblich und bekannt sind, beispielsweise und insbesondere ein Gasbypass zwischen dem Materialkühler 40 und dem Calcinator 20. Ebenso kann der Materialkühler 40 beispielsweise einen weiteren Gasstrom aufweisen, beispielsweise insbesondere im Endbereich (bei geringer Temperatur des Materials).

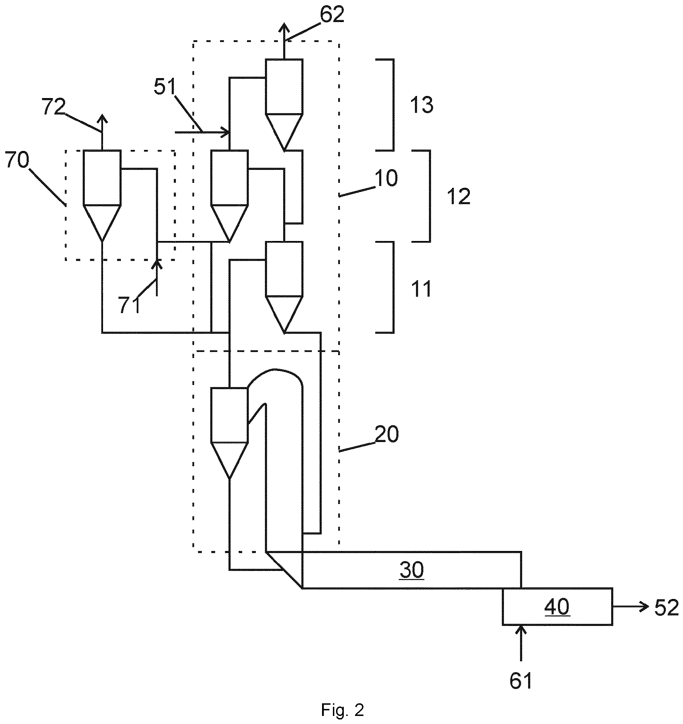

Fig. 2 zeigt nun zusätzlich zum Stand der Technik eine Wärmetauschvorrichtung 70 in einem ersten Beispiel auf. Der Materialstrom nach dem Abscheidezyklon der zweiten Stufe wird teilweise in die Wärmetauschvorrichtung 70 überführt. Dadurch kann das Material in einfacher Weise ausgeschleust werden, ohne dass beim Wiedereinbringen Nebenluft in die Anlage eingebracht wird. Im gezeigten Beispiel wird der Materialstrom mit einem Medium, beispielsweise Luft, welches durch den Mediumeinlass 71 zugeführt wird, in einem Gleichstromwärmetauscher in Kontakt gebracht und anschließend in einem Abscheidezyklon wieder getrennt. Somit kann das erwärmte Medium, beispielsweise Luft, durch den Mediumauslass 72 abgegeben und einem weiteren Prozess zugeführt werden.

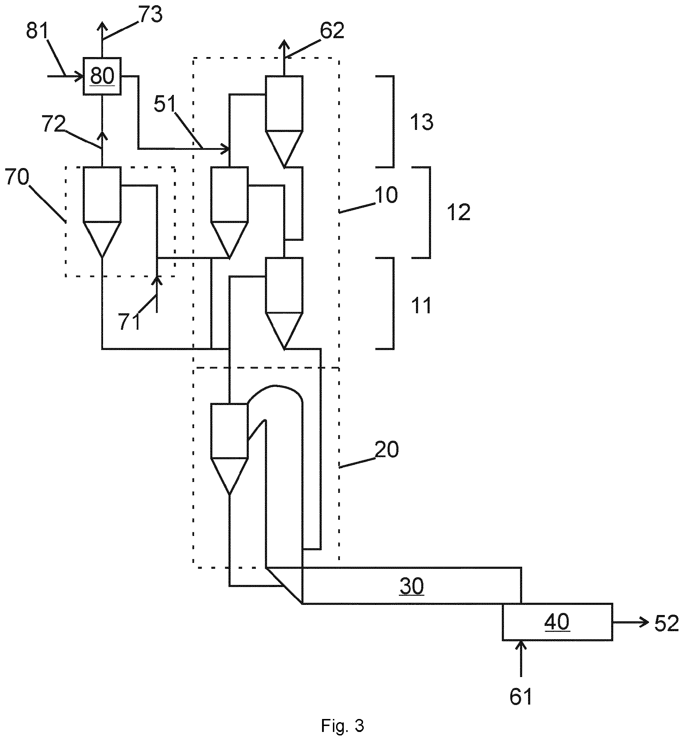

Das in Fig. 3 gezeigte zweite Beispiel weist zusätzlich zum in Fig. 2 gezeigten Beispiel zusätzlich ein Mahlvorrichtung 80 auf. Das in der Wärmetauschvorrichtung 70 erwärmte Medium wird in die Mahlvorrichtung 80 überführt. Über den Mahlguteinlass 81 wird das ungemahlene Material der Mahlvorrichtung 80 zugeführt, dort vermahlen und dann über den Materialeinlass 51 in den Vorwärmer 10 überführt. Hierbei muss das Material nicht direkt und unverzüglich überführt werden, vielmehr kann bevorzugt eine Zwischenspeicherung in einem Silo erfolgen. Beispielsweise kann auch eine weitere Versmischung, auch mit weiteren Feststoffen, erfolgen. Das in der Mahlvorrichtung 80 abgekühlte Medium wird über den Kaltmediumauslass 73 abgegeben und könnte wenigstens teilweise zum Mediumeinlass 71 zurückgeführt werden.

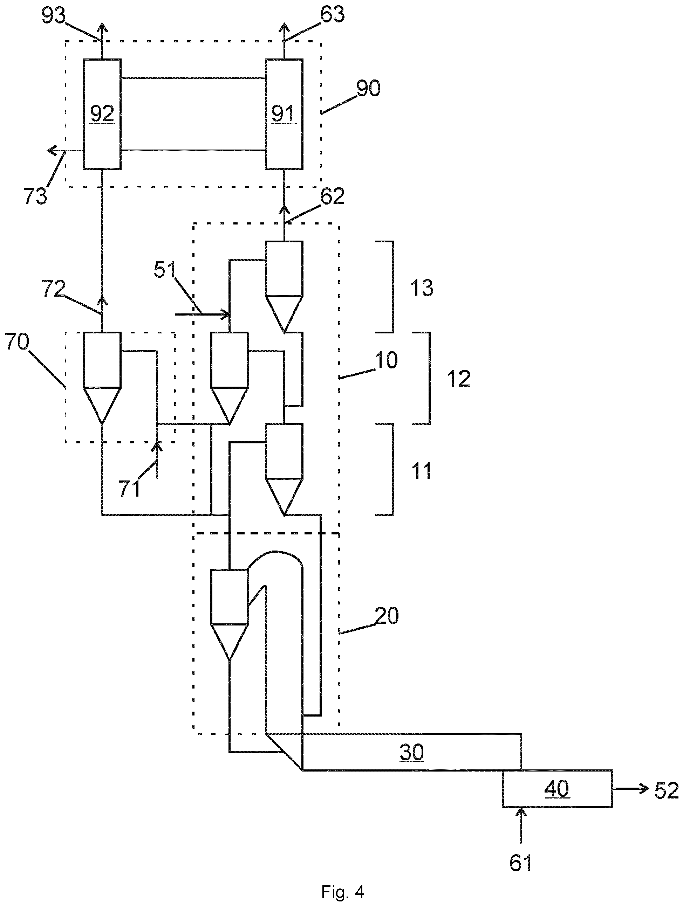

Das in Fig. 4 gezeigte dritte Beispiel weist zusätzlich zum in Fig. 2 gezeigten Beispiel eine Kohlendioxidabtrennvorrichtung 90, beispielsweise einen Amin-Wäscher auf. Das Abgas der Anlage wird vom Gasauslass 62 in die Kohlendioxidabtrennvorrichtung 90 überführt, genauer in den Absorber 91. Im Absorber 91 wird insbesondere ein großer Anteil, beispielsweise 90 %, des Kohlendioxids gebunden, beispielsweise an einem Amin. Das so gereinigte Abgas wird dann über den Abgasauslass 63 abgegeben. Das mit gebundenem Kohlendioxid beladene Waschsystem, beispielsweise Amin, wird vom Absorber 91 in einen Regenerator 92 überführt, um dort das Kohlendioxid wieder freizusetzen und so das Waschmedium wieder in den Absorber 91 zurück zu überführen. Die für die Regeneration notwendige Energie wird durch das in der Wärmetauschvorrichtung 70 erwärmte Medium aus dem Mediumauslass 72 der Kohlendioxidabtrennvorrichtung 90 zugeführt und nach Abgabe der notwendigen Energie über den Kaltmediumauslass 73 wieder abgegeben. Hierbei verläuft das Medium üblicherweise in einem getrennten System, beispielsweise Wärmetauschrohren, sodass es nicht zu einem direkten Kontakt zwischen dem Amin und dem Medium kommt. Hierdurch wird auch eine anschließende Trennung des Mediums vom Amin oder Kohlendioxid vermieden. Das Medium kann vom Kaltmediumauslass 73 erneut dem Mediumeinlass 71 zugeführt werden. Nach der erneuten Freisetzung des Kohlendioxids wird dieses über den Kohlendioxidauslass 93 abgegeben und kann weiterverwendet werden.

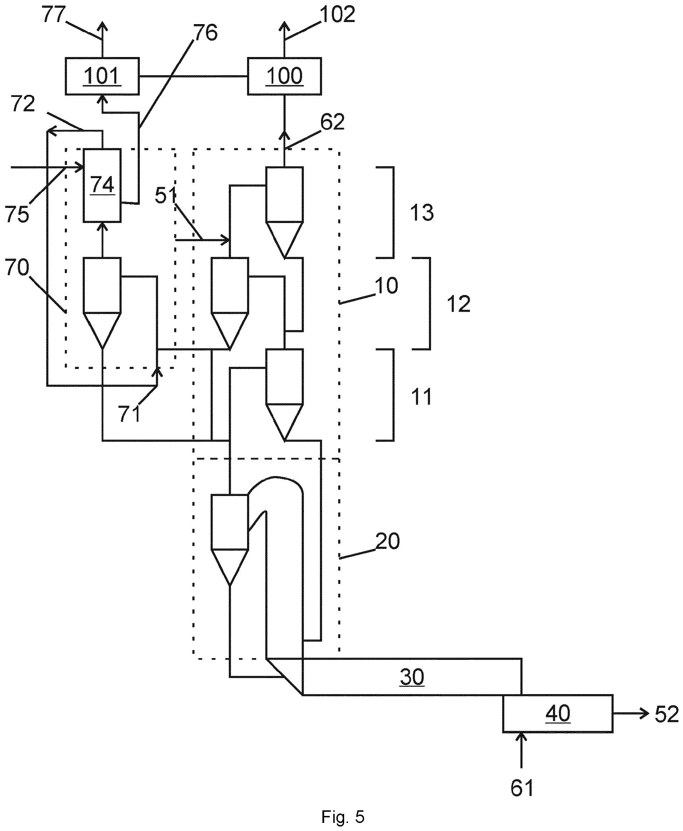

Fig. 5 zeigt ein viertes Beispiel. Die Anlage wird in diesem Fall im Oxyfuel-Verfahren betrieben, sodass das Abgas am Gasauslass 62 (nach einer nicht gezeigten Entfeuchtung) zu einem extrem hohen Anteil aus Kohlendioxid besteht, sodass dieses in einen Verdichter 100 geführt und über einen Kohlendioxidauslass 102 abgegeben wird. Der Verdichter 100 wird über einer Turbine 101 angetrieben. Um die Turbine 101 anzutreiben ist die Wärmetauschvorrichtung 70 zweistufig ausgeführt. In einer ersten Wärmetauschstufe wird die Wärme auf ein im Kreis geführtes Gas übertragen und in der zweiten Wärmetauschstufe 74 auf einen Dampf, welcher über den Dampfeinlass 75 zugeführt und als Heißdampf 76 in die Turbine 101 überführt wird, übertragen. Der nach der Turbine 101 abgekühlte Dampf wird über den Dampfauslass 77 wieder abgegeben und kann zum Dampfeinlass 75 zurückgeführt werden.

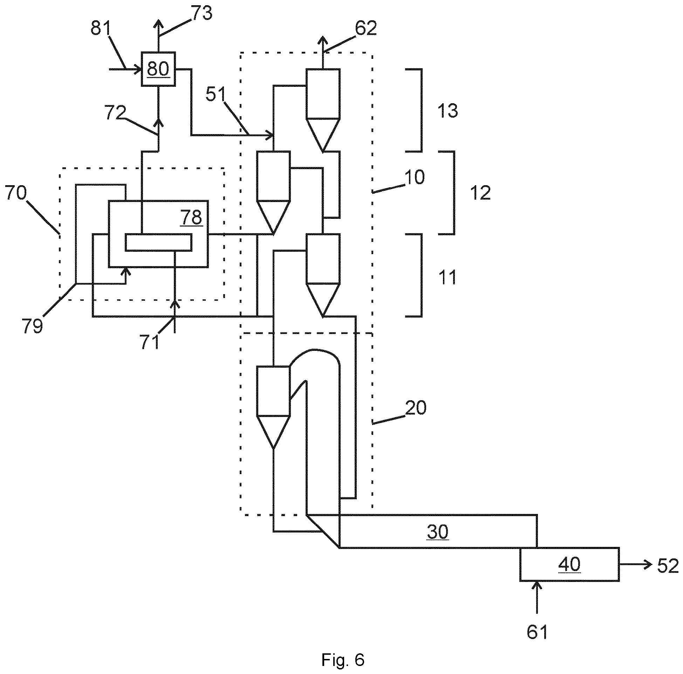

Fig. 6 zeigt ein fünftes Beispiel, welches sich in der Art der Wärmetauschvorrichtung 70 von dem zweiten Beispiel aus Fig. 3 unterscheidet. Die Wärmetauschvorrichtung 70 ist im gezeigten fünften Beispiel ein Wirbelbettwärmetauscher 78, welches über einen Fluidisierungsluftkreislauf 79 eine Wirbelschicht im Inneren erzeugt. Innerhalb der Wirbelschicht sind Wärmetauschrohre angeordnet, die über einen Mediumeinlass 71 mit einem Medium versorgt werden und dieses Medium erwärmt über den Medienauslass 72 an die Mahlvorrichtung 80 weitergeführt wird.

### Bezugszeichen

- 10: Vorwärmer
- 11: erste Stufe
- 12: zweite Stufe
- 12: dritte Stufe
- 20: Calcinator
- 30: Ofen
- 40: Materialkühler
- 51: Materialeinlass
- 52: Materialauslass
- 61: Gaseinlass
- 62: Gasauslass
- 63: Abgasauslass
- 70: Wärmetauschvorrichtung
- 71: Mediumeinlass
- 72: Mediumauslass
- 73: Kaltmediumauslass
- 74: zweite Wärmetauschstufe
- 75: Dampfeinlass
- 76: Heißdampf
- 77: Dampfauslass
- 78: Wirbelbettwärmetauscher
- 79: Fluidisierungsluftkreislauf
- 80: Mahlvorrichtung
- 81: Mahlguteinlass
- 82: Kaltmediumauslass
- 90: Kohlendioxidabtrennvorrichtung
- 91: Absorber
- 92: Regenerator
- 93: Kohlendioxidauslass
- 100: Verdichter
- 101: Turbine
- 102: Kohlendioxidauslass

## Patentansprüche

1. Anlage zur thermischen Behandlung eines mineralischen Materials, wobei die Anlage einen Vorwärmer (10), einen Calcinator (20) und einen Ofen (30) aufweist, wobei die Anlage einen Gaseinlass (61) und einen Gasauslass (62) sowie einen Materialeinlass (51) und einen Materialauslass (52) aufweist, wobei die Bestandteile zur Überführung eines Materialstromes vom Materialeinlass (51) über den Vorwärmer (10), den Calcinator (20) und den Ofen (30) zum Materialauslass (52) verbunden sind, wobei die Bestandteile zur Überführung eines Gasstromes vom Gaseinlass (61) über den Ofen (30), den Calcinator (20) und den Vorwärmer (10) zum Gasauslass (62) verbunden sind, wobei der Vorwärmer (10) mehrstufig ausgeführt ist, **dadurch gekennzeichnet, dass** der Calcinator (20) zur Überführung des den Calcinator (20) verlassenden Materialstroms oder der Vorwärmer (10) zur Überführung des eine Stufe (11, 12, 13) des Vorwärmers (10) verlassenden Materialstroms mit einer Wärmetauschvorrichtung (70) verbunden ist, wobei die Wärmetauschvorrichtung (70) zur Rückführung des Materialstroms mit dem Vorwärmer (10) verbunden ist.

2. Anlage nach Anspruch 1, **dadurch gekennzeichnet, dass** die Wärmetauschvorrichtung (70) ein Gleichstromwärmetauscher mit Abscheidezyklon oder ein Wirbelbettwärmetauscher (78) ist.

3. Anlage nach einem der vorstehenden Ansprüche, **dadurch gekennzeichnet, dass** die Wärmetauschvorrichtung (70) mit einer Mahlvorrichtung (80) oder einer Trocknungsvorrichtung verbunden ist.

4. Anlage nach einem der vorstehenden Ansprüche, **dadurch gekennzeichnet, dass** der Gasauslass (62) der Anlage mit einer Kohlendioxidabtrennvorrichtung (90) verbunden ist.

5. Anlage nach Anspruch 4, **dadurch gekennzeichnet, dass** die Kohlendioxidabtrennvorrichtung (90) ein Amin-Wäscher ist, wobei der Amin-Wäscher eine Amin-Regenerationsvorrichtung aufweist, wobei die Amin-Regenerationsvorrichtung mit der Wärmetauschvorrichtung (70) zur Überführung des in der Wärmetauschvorrichtung (70) erwärmten Mediums verbunden ist.

6. Anlage nach einem der vorstehenden Ansprüche, **dadurch gekennzeichnet, dass** die dem Calcinator (20) benachbarte erste Stufe (11) des Vorwärmers (10) zur Überführung des die erste Stufe (11) des Vorwärmers (10) verlassenden Materialstroms mit der Wärmetauschvorrichtung (70) verbunden ist und die Wärmetauschvorrichtung (70) zur Rückführung des Materialstroms mit der zweiten Stufe (12) des Vorwärmer (10) verbunden ist, wobei die zweite Stufe (12) die der ersten Stufe (11) in Materialstromrichtung nachfolgende und in Gasstromrichtung vorangehende Stufe der ersten Stufe (11) ist.

7. Anlage nach einem der vorstehenden Ansprüche, **dadurch gekennzeichnet, dass** der Ofen (30) und/oder der Calcinator (20) eine Ersatzbrennstoffzufuhrvorrichtung aufweist.

8. Anlage nach einem der vorstehenden Ansprüche, **dadurch gekennzeichnet, dass** die Wärmetauschvorrichtung (70) mit einer Turbine verbunden ist, wobei die Turbine mit einem Kohlendioxidkompressor verbunden ist.

9. Anlage nach einem der vorstehenden Ansprüche, **dadurch gekennzeichnet, dass** die Wärmetauschvorrichtung (70) zweistufig ausgebildet ist, wobei die erste Wärmetauschstufe zum Übertrag der Wärme auf einen Gasstrom ausgebildet ist, wobei die zweite Wärmetauschstufe (74) zur indirekten Übertragung der Wärme von dem in der ersten Wärmetauschstufe erwärmten Gasstroms auf einen Dampfstrom ausgebildet ist.

10. Anlage nach einem der vorstehenden Ansprüche, **dadurch gekennzeichnet, dass** die Anlage eine weitere Wärmetauschvorrichtung (70) aufweist.

11. Anlage nach einem der vorstehenden Ansprüche, **dadurch gekennzeichnet, dass** die Wärmetauschvorrichtung (70) eine Kaltmaterialzuführung aufweist, wobei in der Wärmetauschvorrichtung (70) der Materialstrom und der Kaltmaterialstrom, welcher durch die Kaltmaterialzuführung zugeführt wird, vermischt wird, wobei die Wärmetauschvorrichtung (70) zur Rückführung des Materialstroms über den Materialeinlass (51) mit dem Vorwärmer (10) verbunden ist.

12. Anlage nach einem der vorstehenden Ansprüche, **dadurch gekennzeichnet, dass** die Anlage eine Anlage zur Herstellung von Zementklinker ist.

13. Verfahren zum Betreiben einer Anlage nach einem der vorstehenden Ansprüche, **dadurch gekennzeichnet, dass** Verbrennungsprozesse ausschließlich innerhalb der Anlage durchgeführt werden.

14. Verfahren nach Anspruch 13, **dadurch gekennzeichnet, dass** die in der Wärmetauschvorrichtung (70) ausgeschleuste Wärmemenge in Abhängigkeit der Temperatur des Gasstromes am Gasauslass (62) oder einem dem Gasauslass (62) nachgelagerten Punkt des Gasstromes geregelt wird.

15. Verfahren nach einem der Anspruch 13 bis 14, **dadurch gekennzeichnet, dass** die Anlage mit einem Gas mit weniger als 50 Vol.-%, bevorzugt weniger als 10 Vol.-%, Stickstoff in dem Gaseinlass (61) zugeführten Gasstrom betrieben wird.

16. Verfahren nach einem der Anspruch 13 bis 15, **dadurch gekennzeichnet, dass** die Wärmetauschvorrichtung (70) Umgebungsluft als Wärmetauschmedium verwendet, wobei das Wärmetauschmedium Luft mit dem Materialstrom in direkten Kontakt gebracht wird.

## Claims

1. Plant for the thermal treatment of a mineral material, the plant having a preheater (10), a calciner (20) and a furnace (30), the plant having a gas inlet (61) and a gas outlet (62) as well as a material inlet (51) and a material outlet (52), wherein the components for transferring a material flow from the material inlet (51) via the preheater (10), the calciner (20) and the furnace (30) to the material outlet (52) are connected, wherein the components for transferring a gas flow from the gas inlet (61) via the furnace (30), the calciner (20) and the furnace (30) are connected to the material outlet (52), the calciner (20) and the preheater (10) to the gas outlet (62), the preheater (10) being of multi-stage design, **characterised in that** the calciner (20) for transferring the material stream leaving the calciner (20) or the preheater (10) for transferring the material stream leaving one stage (11, 12, 13) of the preheater (10) is connected to a heat exchange device (70), wherein the heat exchange device (70) is connected to the preheater (10) for returning the material flow.

2. Plant according to claim 1, **characterised in that** the heat exchange device (70) is a co-current heat exchanger with separator cyclone or a fluidised bed heat exchanger (78).

3. Plant according to one of the preceding claims, **characterised in that** the heat exchange device (70) is connected to a grinding device (80) or a drying device.

4. Plant according to one of the preceding claims, **characterised in that** the gas outlet (62) of the system is connected to a carbon dioxide separation device (90).

5. Plant according to claim 4, **characterised in that** the carbon dioxide separation device (90) is an amine scrubber, the amine scrubber comprising an amine regeneration device, the amine regeneration device being connected to the heat exchange device (70) for transferring the medium heated in the heat exchange device (70).

6. Plant according to one of the preceding claims, **characterised in that** the first stage (11) of the preheater (10) adjacent to the calciner (20) is connected to the heat exchange device (70) for transferring the material flow leaving the first stage (11) of the preheater (10) and the heat exchange device (70) is connected to the second stage (12) of the preheater (10) for returning the material flow, wherein the second stage (12) is the stage of the first stage (11) following the first stage (11) in the material flow direction and preceding it in the gas flow direction.

7. Plant according to one of the preceding claims, **characterised in that** the furnace (30) and/or the calciner (20) has a substitute fuel feed device.

8. Plant according to one of the preceding claims, **characterised in that** the heat exchange device (70) is connected to a turbine, wherein the turbine is connected to a carbon dioxide compressor.

9. Plant according to one of the preceding claims, **characterised in that** the heat exchange device (70) is designed in two stages, the first heat exchange stage being designed to transfer the heat to a gas stream, the second heat exchange stage (74) being designed to indirectly transfer the heat from the gas stream heated in the first heat exchange stage to a steam stream.

10. Plant according to one of the preceding claims, **characterised in that** the system has a further heat exchange device (70).

11. Plant according to one of the preceding claims, **characterised in that** the heat exchange device (70) has a cold material feed, wherein the material flow and the cold material flow, which is fed by the cold material feed, are mixed in the heat exchange device (70), wherein the heat exchange device (70) is connected to the preheater (10) via the material inlet (51) for recirculation of the material flow.

12. Plant according to one of the preceding claims, **characterised in that** the plant is a plant for the production of cement clinker.

13. Method for operating an plant according to one of the preceding claims, **characterised in that** combustion processes are carried out exclusively within the installation.

14. Method according to claim 13, **characterised in that** the amount of heat discharged in the heat exchange device (70) is controlled as a function of the temperature of the gas flow at the gas outlet (62) or at a point of the gas flow downstream of the gas outlet (62).

15. Method according to one of claims 13 to 14, **characterised in that** the installation is operated with a gas containing less than 50% by volume, preferably less than 10% by volume, of nitrogen in the gas stream supplied to the gas inlet (61).

16. Method according to one of claims 13 to 15, **characterised in that** the heat exchange device (70) uses ambient air as the heat exchange medium, the heat exchange medium air being brought into direct contact with the material flow.

## Revendications

1. Installation pour le traitement thermique d'une matière minérale, l'installation ayant un préchauffeur (10), un calcinateur (20) et un four (30), l'installation ayant une entrée de gaz (61) et une sortie de gaz (62) ainsi qu'une entrée de matière (51) et une sortie de matière (52), dans lequel les composants pour transférer un flux de matière de l'entrée de matière (51) via le préchauffeur (10), le calcinateur (20) et le four (30) à la sortie de matière (52) sont connectés, dans lequel les composants pour transférer un flux de gaz de l'entrée de gaz (61) via le four (30), le calcinateur (20) et le four (30) sont reliés à la sortie de matière (52), le calcinateur (20) et le préchauffeur (10) à la sortie de gaz (62), le préchauffeur (10) étant de conception multi-étagée, **caractérisé par le fait que** le calcinateur (20) pour transférer le flux de matière quittant le calcinateur (20) ou le préchauffeur (10) pour transférer le flux de matière quittant un étage (11, 12, 13) du préchauffeur (10) est connecté à un dispositif d'échange de chaleur (70), dans lequel le dispositif d'échange de chaleur (70) est connecté au préchauffeur (10) pour renvoyer le flux de matière.

2. Installation selon la revendication 1, **caractérisée par le fait que** le dispositif d'échange de chaleur (70) est un échangeur de chaleur à co-courant avec cyclone séparateur ou un échangeur de chaleur à lit fluidisé (78).

3. Installation selon l'une des revendications précédentes, **caractérisée par le fait que** le dispositif d'échange thermique (70) est relié à un dispositif de broyage (80) ou de séchage.

4. Installation selon l'une des revendications précédentes, **caractérisée par le fait que** la sortie de gaz (62) du système est reliée à un dispositif de séparation du dioxyde de carbone (90).

5. Installation selon la revendication 4, **caractérisée par le fait que** le dispositif de séparation du dioxyde de carbone (90) est un laveur d'amines, le laveur d'amines comprenant un dispositif de régénération des amines, le dispositif de régénération des amines étant relié au dispositif d'échange de chaleur (70) pour transférer le fluide chauffé dans le dispositif d'échange de chaleur (70).

6. Installation selon l'une des revendications précédentes, **caractérisée par le fait que** le premier étage (11) du préchauffeur (10) adjacent au calcinateur (20) est relié au dispositif d'échange de chaleur (70) pour transférer le flux de matière quittant le premier étage (11) du préchauffeur (10) et que le dispositif d'échange de chaleur (70) est relié au deuxième étage (12) du préchauffeur (10) pour renvoyer le flux de matière, le deuxième étage (12) est l'étage du premier étage (11) qui suit le premier étage (11) dans le sens du flux de matière et le précède dans le sens du flux de gaz.

7. Installation selon l'une des revendications précédentes, **caractérisée par le fait que** le four (30) et/ou le calcinateur (20) possède un dispositif d'alimentation en combustible de substitution.

8. Installation selon l'une des revendications précédentes, **caractérisée par le fait que** le dispositif d'échange de chaleur (70) est relié à une turbine, la turbine étant reliée à un compresseur de dioxyde de carbone.

9. Installation selon l'une des revendications précédentes, **caractérisée par le fait que** le dispositif d'échange de chaleur (70) est conçu en deux étapes, la première étape d'échange de chaleur étant conçue pour transférer la chaleur à un flux de gaz, la seconde étape d'échange de chaleur (74) étant conçue pour transférer indirectement la chaleur du flux de gaz chauffé dans la première étape d'échange de chaleur à un flux de vapeur.

10. Installation selon l'une des revendications précédentes, **caractérisée par le fait que** le système comporte un autre dispositif d'échange de chaleur (70).

11. Installation selon l'une des revendications précédentes, **caractérisée par le fait que** le dispositif d'échange thermique (70) a une alimentation en matière froide, dans laquelle le flux de matière et le flux de matière froide, qui est alimenté par l'alimentation en matière froide, sont mélangés dans le dispositif d'échange thermique (70), dans lequel le dispositif d'échange thermique (70) est connecté au préchauffeur (10) via l'entrée de matière (51) pour la recirculation du flux de matière.

12. Installation selon l'une des revendications précédentes, **caractérisée par le fait qu'il** s'agit d'une installation de production de clinker.

13. Procédé d'exploitation d'une installation selon l'une des revendications précédentes, **caractérisé par le fait que** les processus de combustion sont réalisés exclusivement à l'intérieur de l'installation.

14. Procédé selon la revendication 13, **caractérisé par le fait que** la quantité de chaleur évacuée dans le dispositif d'échange de chaleur (70) est contrôlée en fonction de la température du flux de gaz à la sortie de gaz (62) ou à un point du flux de gaz en aval de la sortie de gaz (62).

15. Procédé selon l'une des revendications 13 à 14, **caractérisé par le fait que** l'installation fonctionne avec un gaz contenant moins de 50 % en volume, de préférence moins de 10 % en volume, d'azote dans le flux de gaz fourni à l'entrée de gaz (61).

16. Procédé selon l'une des revendications 13 à 15, **caractérisé par le fait que** le dispositif d'échange de chaleur (70) utilise l'air ambiant comme milieu d'échange de chaleur, l'air du milieu d'échange de chaleur étant mis en contact direct avec le flux de matière.
